# DEMANDE DE BREVET EUROPEEN

(11) **EP 1 174 713 A1**
(43) Date de publication de la demande: **23.01.2002**
(21) Numéro de dépôt: 01401843.6
(22) Date de dépôt: 10.07.2001
(51) Int. Cl.: G01N 29/14

(54) **Procédé et dispositif de mesure du taux de gaz dans un fluide diphasique circulant dans une canalisation de fluide notamment de fluide cryogenique**

(30) Priorité: 12.07.2000 FR 0009102
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Delpuech, Bernard, 78310 Maurepas (FR)
(74) Mandataire: Mellul-Bendelac, Sylvie Lisette

(57) **Abrégé**

Dispositif de mesure du taux de gaz dans un fluide diphasique circulant dans une canalisation de fluide, caractérisé en ce qu'il comporte, disposé à proximité du courant de fluide circulant dans la canalisation, un dispositif (1) sensible aux variations de son résultant du passage du fluide dans la canalisation (2) en fonction de la teneur en gaz dudit fluide et délivrant des signaux de sortie traduisant lesdites variations, ledit dispositif n'étant pas en contact physique avec la canalisation.

Procédé de mesure du taux de gaz dans un fluide diphasique utilisant un tel dispositif.

## Description

La présente invention est relative à la mesure de la présence de deux phases dans les canalisations de fluide cryogénique.

Les équipements cryogéniques utilisent en général les gaz liquéfiés pour maintenir une atmosphère très froide à l'intérieur d'un volume d'application tel qu'un volume de refroidissement, de surgélation ou de croûtage.

Les entrées de chaleur au cours du cheminement du fluide dans une canalisation provoquent la vaporisation du fluide et l'apparition de bulles ou de tronçons de gaz au sein du liquide.

Il s'ensuit l'apparition d'un mode appelé "mode diphasique".

Ce phénomène n'est pas défavorable jusqu'à une certaine valeur qui est d'environ 1% massique pour les tunnels de surgélation classiques.

Au-delà de cette valeur, le rendement des dispositifs de dispersion de l'agent cryogénique se trouve fortement diminué.

L'invention vise à créer un moyen précis de mesure du taux de gaz dans un fluide diphasique qui permette de déterminer avec un maximum de précision la proportion de gaz dans un liquide circulant dans une canalisation cryogénique.

Elle a donc pour objet un dispositif de mesure du taux de gaz dans un fluide diphasique circulant dans une canalisation de fluide, caractérisé en ce qu'il comporte, disposé à proximité du courant de fluide circulant dans ladite canalisation, un dispositif sensible aux variations du son résultant du passage du fluide dans la canalisation en fonction de la teneur en gaz dudit fluide et délivrant des signaux de sortie traduisant lesdites variations, ledit dispositif n'étant pas en contact physique avec la canalisation.

Selon d'autres caractéristiques :
- ledit dispositif sensible est relié à un dispositif d'acquisition des signaux de sortie du dispositif sensible et de conversion de ces signaux en données numériques et ledit dispositif d'acquisition est connecté à son tour à un dispositif de traitement numérique des signaux de sortie convertis en signaux numériques dudit dispositif sensible ;
- le dispositif sensible aux variations du son régnant dans la canalisation est un microphone ;
- le dispositif sensible aux variations du son dans la canalisation est un accéléromètre ;
- le dispositif de traitement numérique comporte des moyens pour générer un graphe enveloppe du spectre de fréquence du dispositif sensible par enregistrement des minima et maxima du spectre de fréquence et des moyens de comparaison de cette courbe enveloppe avec une courbe d'étalonnage du dispositif sensible ;
- le dispositif de traitement numérique comporte des moyens pour générer un graphe modélisé du spectre de fréquence du dispositif et des moyens de comparaison du graphe modélisé avec un graphe modélisé étalon correspondant à une série de valeurs étalons du taux de produit diphasique.

Rappelons qu'un accéléromètre mesure des accélérations que subissent des masses bien déterminées.

Si on le positionne sur une canalisation il va retransmettre des vibrations, si on lui adjoint une membrane, il devient un microphone (selon l'approche « son » de la présente invention).

L'invention sera mieux comprise à la lecture de la description qui va suivre, donnée uniquement à titre d'exemple et faite en se référant aux dessins annexés, sur lesquels :
- la Fig.1 est une vue schématique du dispositif de mesure du taux de gaz dans un fluide diphasique suivant l'invention ;
- la Fig.2 est un graphique de l'amplitude en fonction de la fréquence du signal de sortie du microphone représentant un faible taux de gaz dans un fluide diphasique; et
- la Fig.3 est un graphique de la courbe enveloppe de la réponse en fréquence du microphone et d'une courbe étalon.

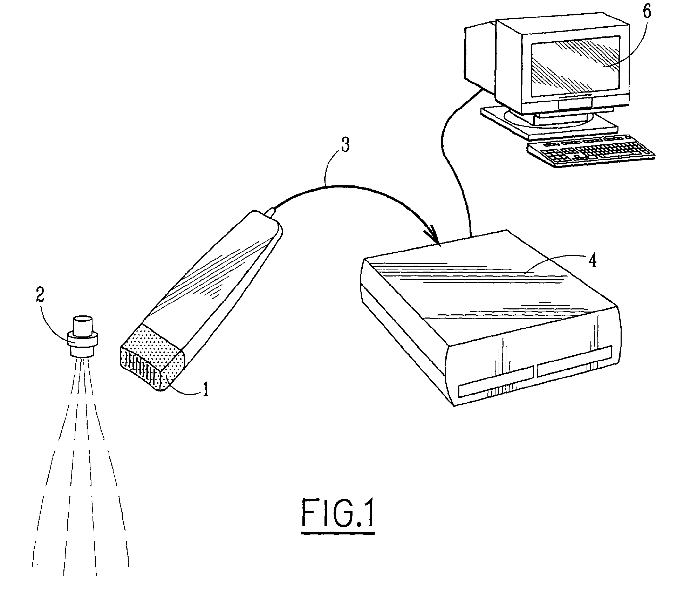

Le dispositif représenté à la figure 1 comporte un microphone 1 disposé à proximité d'une canalisation dans laquelle circule un fluide cryogénique tel que l'azote liquide, ladite canalisation étant ici matérialisée par une buse 2 de pulvérisation d'azote liquide Spray Systems de type VV65025 par exemple.

Le microphone 1 est relié par un câble 3 à une centrale d'acquisition numérique 4 de type Keithley 575, par exemple.

Au lieu du microphone, il est également possible d'utiliser un accéléromètre de faible encombrement.

La centrale d'acquisition 4 est avantageusement connectée à un micro-ordinateur 6 de type PC par exemple.

Lors de la pulvérisation d'azote liquide par la buse 2, le microphone détecte un signal acoustique de fréquence déterminée qui varie en fonction de la teneur de l'azote liquide en gaz.

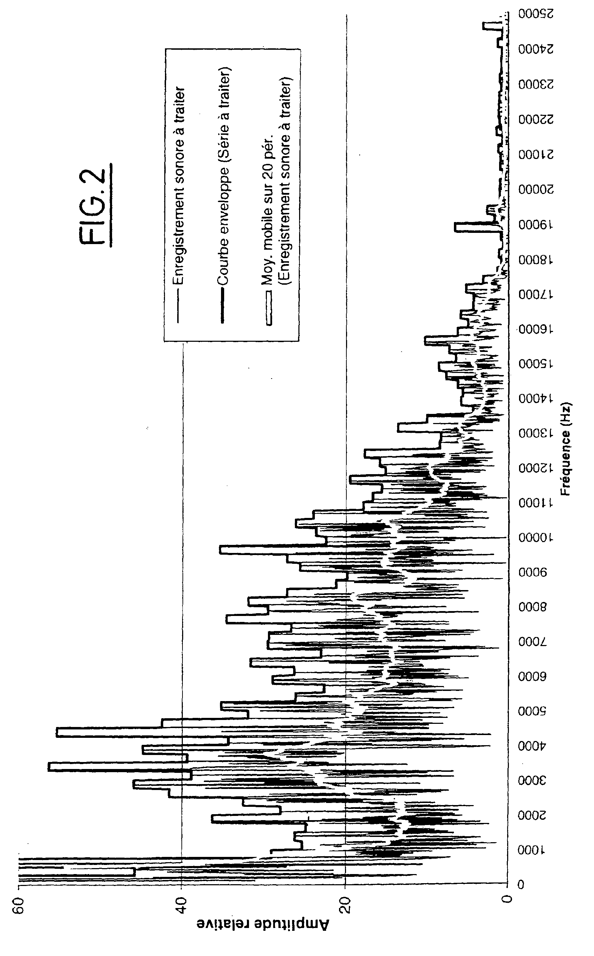

Le signal du microphone enregistré par la centrale d'acquisition présente l'allure du signal de la figure 2.

A l'aide d'un logiciel d'acquisition tel que le logiciel Viewdac, on obtient en temps réel, par transformée rapide de Fourier (FFT), le spectre de fréquence correspondant entre 10 et 25000 Hz qui est ensuite stocké sous forme de fichier ASCII sur disque dur dans l'ordinateur 6.

Un algorithme supplémentaire développé par exemple en langage Pascal permet de générer à partir du fichier précité, un graphe enveloppe représenté en trait plein gras sur la figure 2.

Ce graphe enveloppe d'amplitude et de fréquence est réalisé en enregistrant les minima et maxima du spectre de fréquence.

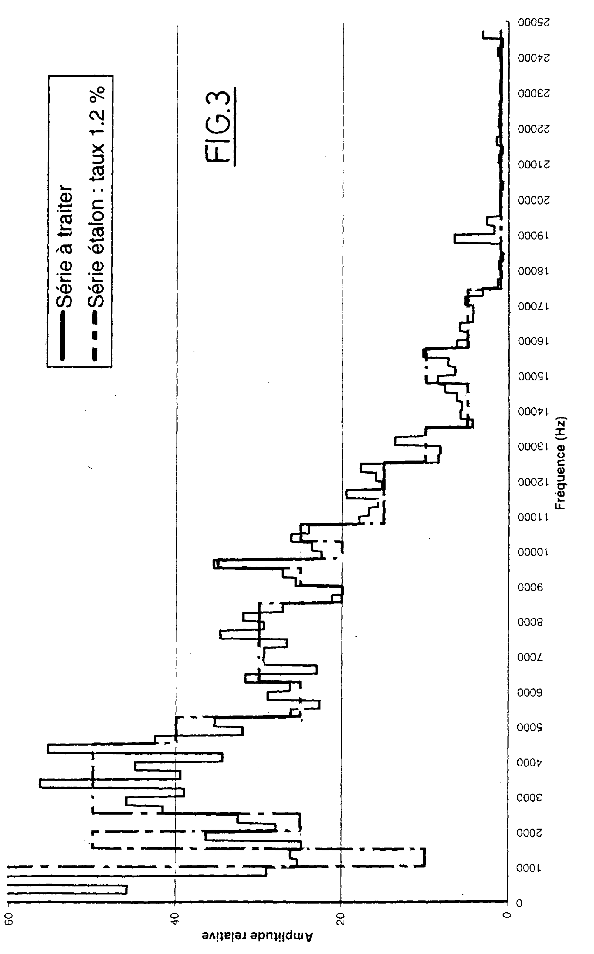

On procède ensuite à un étalonnage précis du graphe enveloppe en générant au sein du liquide pulvérisé par la buse 2, du gaz à partir d'un apport d'énergie mesurable, pour pouvoir établir le taux de gaz dans le fluide diphasique présent en temps réel à la sortie de la canalisation, par mise en coïncidence du graphe en temps réel et des graphes enregistrés lors de la phase d'étalonnage comme représenté sur la figure 3.

Sur cette figure, l'enveloppe du signal à traiter est tracée en trait plein alors que la courbe étalon est tracée en trait interrompu.

Les méthodes d'obtention du taux de gaz dans un fluide diphasique sont nombreuses et vont de la simple comparaison zone par zone des surfaces obtenues par intégration des variables, jusqu'à la modélisation des courbes à comparer.

Ainsi, le dispositif de traitement numérique peut comporter des moyens pour générer un graphe modélisé du spectre de fréquence du dispositif sensible, et des moyens de comparaison du graphe modélisé avec un graphe modélisé étalon correspondant à une série de valeurs étalons du taux de gaz dans un fluide diphasique.

Les résultats obtenus permettent de mesurer le taux de gaz dans un fluide diphasique apparaissant à la sortie des rampes de pulvérisation d'azote liquide dans un tunnel par exemple.

L'invention peut également être appliqué à une mesure en canalisation fermée par mise en place d'un capteur de vibrations adéquat tel qu'un microphone solide/solide ou un accéléromètre à électronique séparée, afin de mesurer en temps réel le taux de gaz dans un fluide diphasique généré dans une canalisation transportant un fluide cryogénique pour tout type d'application industrielle.

## Revendications

1. Dispositif de mesure du taux de gaz dans un fluide diphasique circulant dans une canalisation de fluide, **caractérisé en ce qu'**il comporte, disposé à proximité du courant de fluide circulant dans la canalisation, un dispositif (1) sensible aux variations de son résultant du passage du fluide dans la canalisation (2) en fonction de la teneur en gaz dudit fluide et délivrant des signaux de sortie traduisant lesdites variations, ledit dispositif n'étant pas en contact physique avec la canalisation.

2. Dispositif de mesure suivant la revendication 1, **caractérisé en ce que** le dispositif sensible (1) est relié à un dispositif (4) d'acquisition des signaux de sortie du dispositif sensible, et de conversion de ces signaux en données numériques et ledit dispositif d'acquisition (4) est connecté à son tour à un dispositif (6) de traitement numérique des signaux de sortie convertis en signaux numériques dudit dispositif sensible (1).

3. Dispositif de mesure suivant l'une des revendications 1 et 2, **caractérisé en ce que** ledit dispositif sensible (1) est un microphone.

4. Dispositif de mesure suivant l'une des revendications 1 et 2, **caractérisé en ce que** ledit dispositif sensible est un accéléromètre.

5. Dispositif de mesure suivant l'une des revendications 2 à 4, **caractérisé en ce que** le dispositif de traitement numérique (6) comporte des moyens pour générer un graphe enveloppe du spectre de fréquence du dispositif sensible (1) par enregistrement des minima et maxima du spectre de fréquence et des moyens de comparaison de cette courbe enveloppe avec une courbe d'étalonnage du dispositif sensible.

6. Dispositif de mesure suivant l'une des revendications 2 à 4, **caractérisé en ce que** le dispositif de traitement numérique comporte des moyens pour générer un graphe modélisé du spectre de fréquence du dispositif et des moyens de comparaison du graphe modélisé avec un graphe modélisé étalon correspondant à une série de valeurs étalons du taux de produit diphasique.

7. Procédé de mesure du taux de gaz dans un fluide diphasique circulant dans une canalisation de fluide, **caractérisé en ce que** l'on dispose, à proximité du courant de fluide circulant dans la canalisation, un dispositif (1) sensible aux variations de son résultant du passage du fluide dans la canalisation (2) en fonction de la teneur en gaz dudit fluide et délivrant des signaux de sortie traduisant lesdites variations, et **en ce que** l'on effectue à l'aide dudit dispositif une mesure de telles variations de son à proximité de la canalisation, ledit dispositif n'étant pas en contact physique avec la canalisation.
